# EUROPEAN PATENT APPLICATION

(11) **EP 4 840 604 A1**
(43) Date of publication of application: **18.11.2026**
(21) Application number: 26176217.3
(22) Date of filing: 04.05.2026
(51) Int. Cl.: B27G 19/02, B23D 45/06, B23D 47/08, B27B 5/06

(54) **MACHINE TOOL WITH SAFETY SYSTEM**

(30) Priority: 16.05.2025 IT 202500011034
(71) Applicant: SCM Group S.p.A., 47921 Rimini (RN) (IT)
(72) Inventor: MAZZA, Michele, 47921 RIMINI (IT); DI GIACOMO, Mattia, 47921 RIMINI (IT)
(74) Representative: Tiburzi, Andrea

(57) **Abstract**

The present invention relates to a machine (1) for cutting panels (P), comprising a support frame (2), having a working surface (21), a cutting group (3), arranged on said support frame (2), comprising a cutting tool (31), and at least one support structure (32), coupled to said support frame (2), on which said cutting tool (31) is arranged, wherein said cutting tool (31) is configured to assume a working position, wherein said cutting tool (31) is arranged at least partially above said working surface (21), to cut, when activated, a panel (P) placed on said working surface (21), and a safety position, wherein said cutting tool (31) is arranged below said working surface (21), a safety actuator (4), operated by a control unit (6), configured to move said cutting tool (31) from said working position to said safety position, and a decelerator (5) arranged such that said cutting group (3) impacts on said decelerator (5) when said cutting tool (31) moves from said working position to said safety position.

## Description

The present invention relates to a machine tool with a safety system.

### Field of invention

More specifically, the invention concerns a machine tool of the type mentioned, designed and constructed in particular to ensure the safety of an operator by retracting the work tool, such as a cutting tool, but which can be used for any system that provides for the retraction of the tool or work tool which could cause a hazard.

In the following, the description will be addressed to a machine for cutting wooden panels, but it is clear that it should not be considered limited to this specific use.

### Prior art

Panel cutting machines are widely used in the wood and composite materials industries.

These machines allow to precisely cut large panels into smaller pieces according to specific needs.

Typically, a machine tool consists of a work surface on which the panel to be cut is positioned and moved, a mobile cutting unit equipped with a circular blade, and a movement system that allows the blade to move along predefined axes to perform the desired cuts.

In recent years, automation and computer control have led to significant improvements in the efficiency and precision of these machines.

However, operator safety remains a constant concern, given the presence of high-speed rotating blades. Traditional safety systems rely primarily on physical protections such as screens and barriers, as well as emergency switches that the operator can manually activate in the event of danger.

A technical problem with current machine tools of the type mentioned above is the difficulty of ensuring effective protection for the operator without compromising the accessibility and ease of use of the machine.

Physical guards, if too invasive, can hinder panel loading and unloading operations or limit visibility of the cutting area. On the other hand, safety systems that rely solely on manual intervention by the operator may not be sufficiently rapid in emergency situations.

Another problem is the blade's stopping time once a safety system is activated. The circular blades used in these machines have considerable rotational inertia and, even after the engine is turned off, can continue to rotate for several seconds, potentially causing injury.

Furthermore, proximity detection systems currently in use can be subject to false alarms or, conversely, fail to detect real dangerous situations in a timely manner, especially in work environments with high levels of dust or vibration.

There is a clear need in the industry for a system that overcomes one or more of these problems.

### Purpose of the invention

In light of the above, it is therefore the aim of the present invention to provide a machine tool for cutting or generally machining panels equipped with an effective safety system that guarantees rapid and safe interruption of the movement of the cutting tool in the event of danger, without compromising the accessibility and ease of use of the machine.

Another object of the invention is to provide a system that reduces the risk of injury to the operator.

It is also the purpose of the present invention to implement a reliable proximity detection system, capable of promptly detecting dangerous situations even in working environments with high levels of dust or vibrations.

A further aim of the invention is to reduce the blade exclusion time after the safety system is activated, overcoming the limits of traditional systems linked to the rotational inertia of the circular blades.

Finally, the purpose of the present invention is to provide an integrated safety solution that does not hinder the normal loading and unloading operations of the panels and does not limit the visibility of the cutting area.

### Object of the invention

It is, therefore, specific object of the present invention a machine for cutting panels, comprising a support frame, having a working surface, a cutting group, arranged on said support frame, comprising a cutting tool, and at least one support structure, coupled to said support frame, on which said cutting tool is arranged, wherein said cutting tool is configured to assume a working position, wherein said cutting tool is arranged at least partially above said working surface, to cut, when activated, a panel placed on said working surface, and a safety position, wherein said cutting tool is arranged below said working surface, a safety actuator, operated by a control unit, configured to move said cutting tool from said working position to said safety position, and a decelerator arranged such that said cutting group impacts on said decelerator when said cutting tool moves from said working position to said safety position, wherein said machine is **characterized** in that said decelerator is made of viscoelastic material.

Always according to the invention, said decelerator may be made of mixed-cell elastomer.

Still according to the invention, said decelerator may be made of polyurethane elastomer.

Further according to the invention, said viscoelastic material of said decelerator may have a specific absorption energy (*ε_{S}*) less than or equal to 12 mJ/mm² measured with a test sample of 25 mm thickness.

Still according to the invention, said decelerator may be made as a single piece.

Further according to the invention, said decelerator may be made of coupled layers.

Preferably according to the invention, said decelerator may have a number of layers between four and ten.

Still according to the invention, said decelerator may have a tapered shape in the direction opposite to the direction of movement of said cutting tool when moving from said working position to said safety position.

Further according to the invention, said decelerator may have a truncated-cone shape or a truncated-pyramid shape or a triangular-based prism shape or a triangular-based prism shape with one or more beveled vertices.

Advantageously according to the invention, said support structure may comprise a support arm, having a first end hinged to said support frame, and a second end, on which said cutting tool is arranged.

Always according to the invention, said cutting group may comprise guiding means for guiding said cutting tool from said working position to said safety position, wherein said guide means have a curved shape.

Further according to the invention, said safety actuator may comprise a cylinder-piston group, wherein said cylinder-piston group may comprise a pneumatic valve for air escape. Such pneumatic valve for air escape may be preferably arranged open, so as to maximize the energy absorbed by said decelerator.

Advantageously according to the invention, said machine may comprise a control unit, configured to detect a dangerous situation for a user in relation to said cutting tool and activate said safety actuator.

Still according to the invention, said machine may comprise a detection system for detecting a dangerous situation for a user in relation to said cutting tool wherein said detection system may be connected to and operated by said control unit.

Further according to the invention, said control unit may be configured to operate said safety actuator to move said cutting tool from said working position to said safety position, based on a signal from said detection system, when it detects a dangerous situation.

It is further object of the present invention a machine wherein the said detection system comprises a signal generator, connected to said control unit, a first and a second electrode, connected to said control unit and to said signal generator, wherein said first and second electrode are arranged in proximity to said cutting group, wherein an electric and/or electromagnetic field is generated between said first and said second electrode by said signal generator, and wherein, if a user approaches said cutting group, said electric and/or electromagnetic field is modified, and wherein said detection system detects the variation of said electric and/or electromagnetic field at said first and/or second electrode and communicates it to said control unit.

Further according to the invention, said control unit may be configured to operate said safety actuator to move said cutting tool from said working position to said safety position, if said detection system detects a variation of the electric field that causes an electric field value that is below or above a predefined electric field range.

Still according to the invention, said first electrode may be arranged on said cutting group or on said cutting tool.

Further according to the invention, said second electrode may be arranged in said working surface.

Still according to the invention, said detection system may comprise optical means suitable for detecting the approach of a user or a limb thereof in proximity to said cutting group. The control unit may be suitable for detecting the approach of a user or a limb thereof in proximity to said cutting group.

Preferably according to the invention, said cutting group may comprise a circular saw.

### Brief description of the figures

The present invention will be now described, for illustrative but not limitative purposes, according to its preferred embodiments, with particular reference to the figures of the enclosed drawings, wherein:
figure 1 shows a side sectional view of a panel cutting machine, according to aspects of the present disclosure;
figure 2 shows a decelerator according to one embodiment;
figure 3 shows a side view of a machine with a cutting unit in an operating position;
figure 4 shows a side view of a machine with a cutting unit in a safety position; and
figure 5 shows a schematic of a detection circuit for the panel cutting machine, according to one embodiment.

### Detailed description

In the various figures, similar parts will be indicated with the same numerical references.

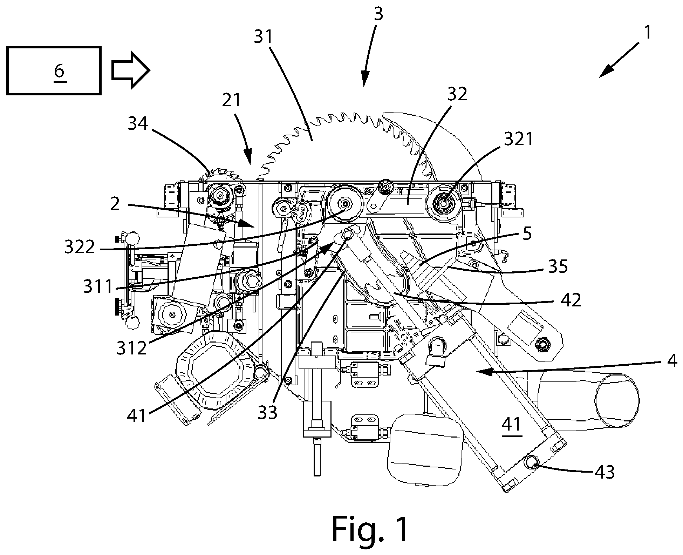

Figure 1 shows a machine tool 1 according to the present invention.

The machine 1 comprises a support frame 2, having a working surface 21. A longitudinal opening or slot (not shown in the figures) is provided in the work surface, the function of which will be better defined below.

A cutting group 3 is arranged on the support frame 2.

The cutting assembly 3 comprises a cutting tool 31 and a support arm 32.

In general, the cutting tool 31 is arranged on a support structure 32 coupled to the support frame 2. In an alternative embodiment, said support structure 32 could be a slide coupled to the support frame 2, which descends vertically on two guides or the like.

The support arm 32 has a first end 321 pivoted to the support frame 2, and a second end 322 on which the cutting tool 31 is arranged.

The cutting tool 31 can assume a working position, in which it is at least partially above the working surface 21, to cut a panel possibly placed on the working surface 21 when operated.

The cutting tool 31 can also assume a safety position below the working surface 21.

In some examples, the cutting tool 31 comprises a circular saw. In the working position, the circular saw 31 is inserted into the aforementioned slot, while in the safety position, the circular saw 31 is located under the working surface 21 and disengaged from the slot.

The cutting tool 31 is arranged on a support body 311, having a slot 312, which may optionally have a curved shape, the function of which will be better defined below.

The cutting assembly 3 according to the present embodiment may also include a scoring blade 34, which rotates in a direction opposite to that of the circular blade 31. The scoring blade 34 is designed to make a first incision on the panel to be cut. The cutting tool 31 (i.e., the circular blade) then passes over the incision made by the scoring blade 34, thus avoiding chipping the panel.

As illustrated in figure 1, the machine 1 comprises a cylinder-piston group 4, which acts as a safety actuator and is arranged so as to cause, when actuated, the passage of said cutting tool 31 from said working position to said safety position.

The cylinder-piston group 4 comprises a cylinder body 41, a piston rod 42, capable of inserting into and exiting said cylinder body 41.

The cylinder body 41 is hinged to said frame 2. The cylinder 41 has its free end 411 hinged to said support body 311 of the cutting tool 31, and in particular with the slot 312.

The cylinder body 41 also comprises an adjustable pneumatic valve 43. The pneumatic valve 43 is always fully open during the blade retraction step. The pneumatic valve 43 is adjustable in that it regulates the air escape by managing the partial opening/closing of a calibrated hole. Typically, this air escape is maximized.

The cutting group 3 also comprises a guide 33, to guide the movement of the cutting tool 31 in the transition from the working position to the safety position.

The guide 33 has a curved shape that accompanies this controlled movement of cutting group 3.

The pneumatic cylinder-piston group 4 can be operated by a logic-type control unit 6, better described below, and is configured to move the cutting tool 31 very quickly from the working position to the safety position.

A decelerator 5 is positioned so that the cutting assembly 3 impacts the decelerator 5 when the cutting tool 31 moves from the working position to the safety position under the action of the cylinder-piston assembly 4.

Decelerator 5 is made of viscoelastic material.

In some embodiments, the viscoelastic material of the decelerator 5 has a specific energy absorption coefficient less than or equal to 12 mJ/mm², measured with a 25 mm thick test sample, as a possible embodiment.

This specific absorption energy given by 12 mJ/mm² refers to the standard range of use and, more precisely, to a linear compression of 55%.

If the component is made of layers of different materials (e.g., Silodamp^{®}SP300) this specific energy could be higher.

Furthermore, with a material (e.g., always Silodamp^{®} SP300), the material would still absorb the impact energy, but in a less "gradual" manner.

In other embodiments, the decelerator 5 is made of a mixed-cell elastomer, which is a foamed material containing both open and closed cells; in other words, it has a porous mixed-cell structure. In some embodiments, the mixed-cell elastomer is polyurethane.

This material has high shock absorbing properties compared to traditional elastomers and rubbers.

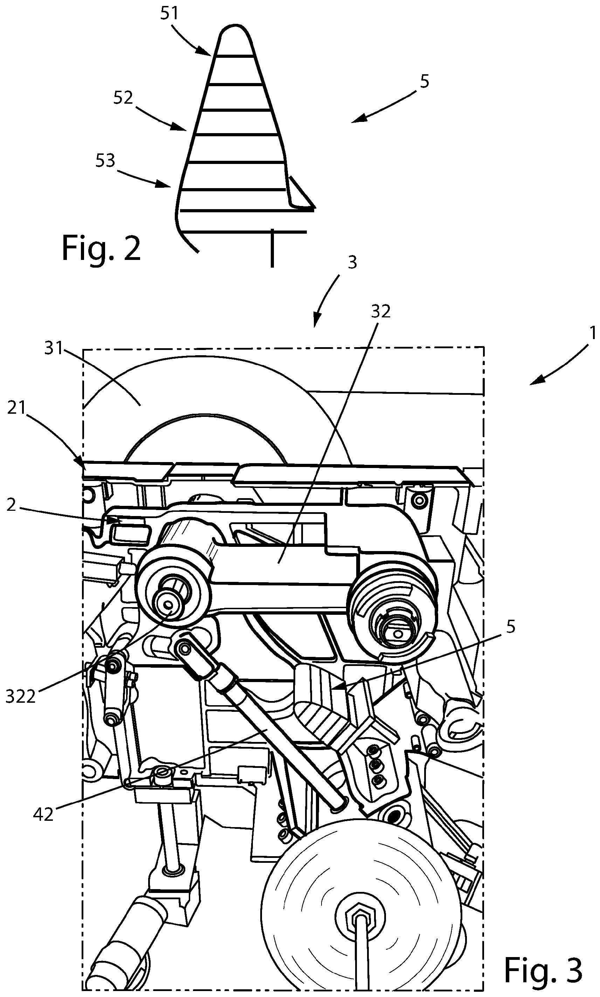

Figure 2 shows a further embodiment of the decelerator 5.

In particular, in one embodiment the decelerator 5 is made in a single piece.

In another embodiment, the decelerator 5 is made of bonded or coupled layers in general. The decelerator 5 may have between four and ten layers. In some implementations, the layers of the decelerator 5 may be 12.5 mm or 25 mm thick.

Referring to figure 2, the decelerator 5 comprises a first group of upper layers 51, a second group of intermediate layers 52, and a third group of lower layers 53, where the layers of the third group of layers are stiffer than the second group of layers 52, which in turn are stiffer than the first group of layers 51. They are also stiffer given the geometry. Furthermore, materials with different stiffnesses can potentially be used.

The decelerator 5 is arranged on a support base 22 of the support frame 2.

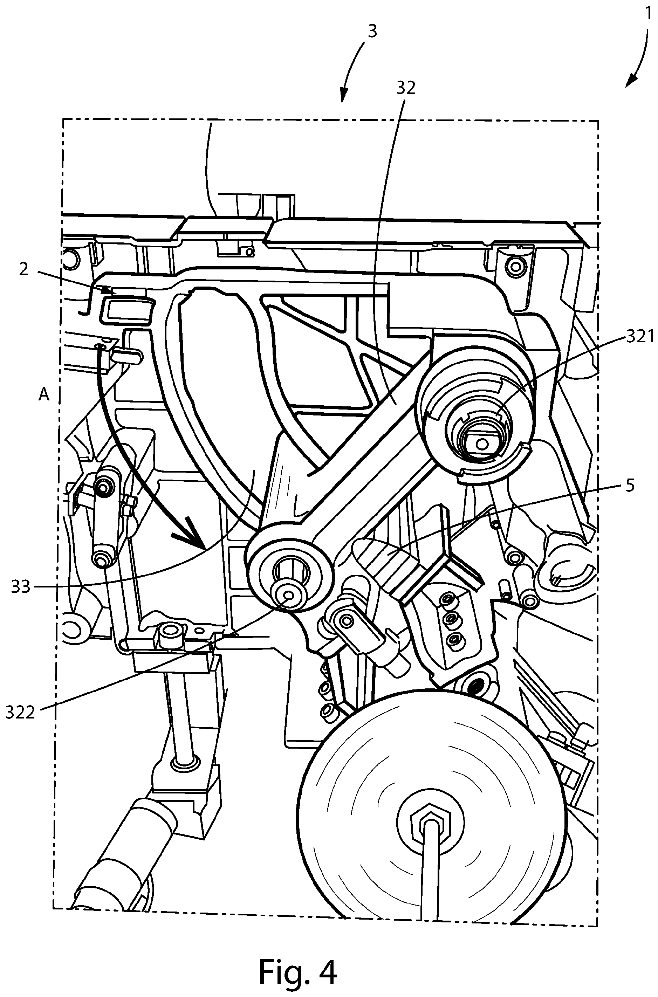

As shown in figures 1, 2, 3 and 4, the decelerator 5 can have different shapes, truncated cone, truncated pyramid (figures 1 and 2) or a prism with a triangular base (figures 3 and 4), in which the triangular bases are arranged perpendicular to the support base of the decelerator 5 or a prism with a triangular base with one or more rounded vertices. Instead, in the case of the truncated pyramid and truncated cone shape, the base is parallel to the support base 35 of the decelerator 5.

Typically, the decelerator 5 has a tapered shape in the direction opposite to the direction of movement of the cutting tool 31 when it moves from the working position to that safety position.

In some examples, the decelerator 5 is made of rubbery Silodamp material^{®}.

The decelerator 5 is positioned, as mentioned, on a support base 22. The decelerator 5 (and therefore the support base 22) is positioned at the point of maximum moment of the arm 32 on which the cutting tool 31 is placed. This positioning maximizes the effectiveness of the decelerator 5 in absorbing the impact energy.

The control unit 6 is configured to detect a dangerous situation for a user and activate the safety actuator (cylinder-piston assembly 4) to move the cutting tool 31 from the working position to the safety position.

The operation of machine 1 will now be described with reference to figures 3 and 4.

The machine 1 normally operates in the configuration in which cutting unit 3 is in the working position. In this case, circular blade 31 emerges from worktable 31 and a user can cut a panel placed on worktable 21, as shown in figure 3.

As illustrated by comparing figures 3 and 4, when the cutting group 3 moves from the working position to the safety position, the cutting tool 31 follows a curved trajectory guided by the guide means 33 (see arrow A).

During this movement, the cutting unit 3 impacts against the decelerator 5. The decelerator 5, which as mentioned has a shape preferably tapered in the direction opposite to the direction of movement of the cutting tool 31, absorbs the energy of the cutting unit 3. In particular, in the embodiment shown in figure 4, the support arm 32 impacts the decelerator 5. Possibly, in other embodiments, other parts of the cutting unit 3 may impact the accelerator 5 when it moves to the safety position.

The cutting group 3 moves from said working position to said safety position extremely quickly, upon command of the control unit 6, thanks to the action of the piston cylinder group 4. This speed of actuation is facilitated when the adjustable pneumatic valve 43 with the air escape is fully open.

This geometric configuration of the decelerator 5 creates an effect of increasing stiffness as the cutting group 3 advances in its movement and impacts with the decelerator 5 towards the safety position.

The interaction between the cutting assembly 3, the curved guide means 33, and the decelerator 5 with its tapered shape, allows for effective slowing down and absorption of the kinetic energy of the cutting assembly 3 as it moves towards the safety position.

The control unit 6 can be of different types.

In particular, the control unit 6 can be implemented as an integral part of the control logic of the machine tool 1.

In other embodiments, the control unit 6 may be implemented by a programmable logic controller (PLC), a programmable microprocessor, a microcontroller or an equivalent electronic processing unit, configured to execute a sequence of stored instructions in order to implement the functional logic described in this application.

In further embodiments, alternatively, the control unit 6 may be implemented via an embedded platform based on a microprocessor, e.g. a system on a chip (SoC), capable of processing digital and analog signals.

In further variants, the control unit 6 can be integrated into a distributed control network of the machine tool 1, communicating with other control modules via an industrial bus (e.g. CAN, EtherCAT, PROFIBUS or similar), and performing supervision, regulation or operator interfacing functions via HMI panels.

To operate the cylinder-piston group 4, the machine 1 may comprise a detection system 8 to detect the approach of a user to the cutting group 3.

The detection system 8 is connected to and controlled by the control unit 6 to ensure operator safety.

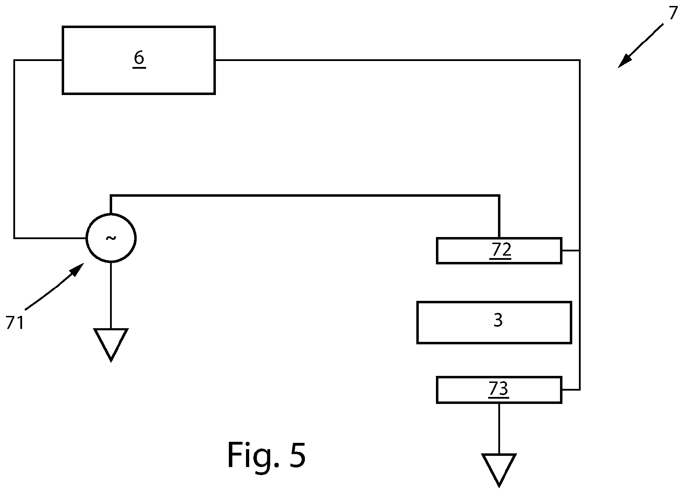

Figure 5 shows a possible embodiment of the detection system 8, comprising a signal generator 71 controlled by the control unit 6.

The detection system 8 further comprises a first electrode 72 and a second electrode 73, both connected to the control unit 6 and to the signal generator 71. The first electrode 72 and the second electrode 73 are arranged in correspondence with the cutting group 3.

The signal generator 71 generates a variable electric and/or electromagnetic field between the first electrode 72 and the second electrode 73. When a user approaches the cutting unit 3, the variable electric and/or electromagnetic field is changed.

The control unit 6 detects this variation in the field on the first electrode 72 and on the second electrode 73, for example by measuring a variation in impedance on a passive component, such as a resistor, a capacitor or an inductor, detecting the presence of the user in the vicinity of the cutting unit 3, and therefore a potential dangerous situation. A dangerous situation means the approach of a part of the body of an operator or user in general to the cutting tool 31.

In some configurations, the first electrode 72 may be electrically connected to the cutting assembly 3 or, more precisely, to the cutting tool 31. In particular, the cutting tool 31 may actually act as the first electrode 72.

In one embodiment, the control unit 6 is configured to actuate the safety actuator 4 if it detects a change in the electric field that is lower or higher than a predefined electric field range. This predefined electric field range corresponds to a safe working situation. In particular, according to one aspect of the invention, the predefined electric field range changes as a function of the machine configuration (i.e., blade height, position of workpiece guide elements) and is set by the control unit 6 before processing.

In addition to the electric/electromagnetic field-based detection system 8 shown in figure 5, the machine 1 may also include optical means (not shown) as part of the detection system 8.

These optical means are designed to detect the approach of a user or a limb of the user in the vicinity of the cutting group 3.

The control unit 6 is configured to process the signals coming from these optical means and thus detect the approach of the user or one of his limbs to the cutting group 3.

These optical detection means may consist of one or more infrared or colored LEDs and photodetectors. When a user interrupts the optical connection between the LEDs and the photodetectors in a certain sensitive volume, a risk to the user is detected. In this case, the control unit 6 activates the cylinder-piston assembly 4 and moves the cutting unit 3 to the safety position. Then, the shock absorber 5 absorbs the energy of the cutting unit 3 moving from the working position to the rest position, thus protecting the operator from possible injury.

### Advantages

An advantage of the present invention is that it provides a machine equipped with a safety system that ensures rapid interruption of the movement of the cutting tool in case of danger, without compromising the accessibility and ease of use of the machine.

Another advantage of the present invention is to implement a viscoelastic shock absorber that can effectively absorb the kinetic energy of the cutting tool during emergency stopping, reducing the risk of injury to the operator.

Another advantage of the present invention is that it offers a reliable proximity detection system, capable of promptly detecting dangerous situations even in working environments with high levels of dust or vibrations.

Another advantage of this invention is that it reduces the blade's cut-off time after the safety system is activated, overcoming the limitations of traditional systems related to the rotational inertia of circular blades. Specifically, the solution allows the blade to disappear from the work surface in just a few milliseconds.

It is also an advantage of the present invention to provide an integrated safety solution that does not hinder normal panel loading and unloading operations and does not limit visibility of the cutting area.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine (1) for cutting panels (P), comprising
a support frame (2), having a working surface (21),
a cutting group (3), arranged on said support frame (2), comprising
a cutting tool (31), and
at least one support structure (32), coupled to said support frame (2), on which said cutting tool (31) is arranged,
wherein said cutting tool (31) is configured to assume a working position, wherein said cutting tool (31) is arranged at least partially above said working surface (21), to cut, when activated, a panel (P) placed on said working surface (21), and a safety position, wherein said cutting tool (31) is arranged below said working surface (21),
a safety actuator (4), operated by a control unit (6), configured to move said cutting tool (31) from said working position to said safety position, and
a decelerator (5) arranged such that said cutting group (3) impacts on said decelerator (5) when said cutting tool (31) moves from said working position to said safety position,
wherein said machine (1) is **characterized in that** said decelerator (5) is made of viscoelastic material.

2. Machine (1) according to claim 1, **characterized in that** said decelerator (5) is made of mixed-cell elastomer.

3. Machine (1) according to any one of the preceding claims, **characterized in that** said decelerator (5) is made of polyurethane elastomer.

4. Machine (1) according to any one of the preceding claims, **characterized in that** said viscoelastic material of said decelerator (5) has a specific absorption energy (*ε_{S}*) less than or equal to 12 mJ/mm² measured with a test sample of 25 mm thickness.

5. Machine (1) according to any one of the preceding claims, **characterized in that** said decelerator (5) is made as a single piece.

6. Machine (1) according to any one of the preceding claims, **characterized in that** said decelerator (5) is made of coupled layers.

7. Machine (1) according to the preceding claim, **characterized in that** said decelerator (5) has a number of layers between four and ten.

8. Machine (1) according to any one of the preceding claims, **characterized in that** said decelerator (5) has a tapered shape in the direction opposite to the direction of movement of said cutting tool (31) when moving from said working position to said safety position.

9. Machine (1) according to any one of the preceding claims, **characterized in that** said decelerator (5) has a truncated-cone shape or a truncated-pyramid shape or a triangular-based prism shape or a triangular-based prism shape with one or more beveled vertices.

10. Machine (1) according to any one of the preceding claims, **characterized in that** said support structure comprises a support arm (32), having a first end (321) hinged to said support frame (2), and a second end (322), on which said cutting tool (31) is arranged.

11. Machine (1) according to any one of the preceding claims, **characterized in that** said cutting group (3) comprises guiding means (33) for guiding said cutting tool (31) from said working position to said safety position, wherein said guide means (33) have a curved shape.

12. Machine (1) according to any one of the preceding claims, **characterized in that** said safety actuator comprises a cylinder-piston group (4),
wherein said cylinder-piston group (4) comprises a pneumatic valve (43) for air escape, and
wherein said pneumatic valve (43) for air escape is preferably arranged open, so as to maximize the energy absorbed by said decelerator (5).

13. Machine (1) according to any one of the preceding claims, **characterized in that** it comprises a control unit (6), configured to detect a dangerous situation for a user in relation to said cutting tool (31) and activate said safety actuator (4).

14. Machine (1) according to the preceding claim, **characterized**
**in that** it comprises a detection system (7) for detecting a dangerous situation for a user in relation to said cutting tool (31)
wherein said detection system (7) is connected to and operated by said control unit (6).

15. Machine (1) according to the preceding claim, **characterized in that** said control unit (6) is configured to operate said safety actuator (4) to move said cutting tool (31) from said working position to said safety position, based on a signal from said detection system (7), when it detects a dangerous situation.

16. Machine (1) according to any one of claims 13-15, **characterized in that** said detection system (7) comprises
a signal generator (71), connected to said control unit (6),
a first (72) and a second (73) electrode, connected to said control unit (6) and to said signal generator (71), wherein said first (72) and second (73) electrode are arranged in proximity to said cutting group (3),
wherein an electric and/or electromagnetic field is generated between said first (72) and said second (73) electrode by said signal generator (71), and
wherein, if a user approaches said cutting group (3), said electric and/or electromagnetic field is modified, and
wherein said detection system (7) detects the variation of said electric and/or electromagnetic field at said first (72) and/or second (73) electrode and communicates it to said control unit (6).

17. Machine (1) according to the preceding claim, **characterized in that** said control unit (6) is configured to operate said safety actuator (4) to move said cutting tool (31) from said working position to said safety position, if said detection system (7) detects a variation of the electric field that causes an electric field value that is below or above a predefined electric field range.

18. Machine (1) according to any one of claims 17 or 18, **characterized in that** said first electrode (72) is arranged on said cutting group (3) or on said cutting tool (31).

19. Machine (1) according to any one of claims 17-19, **characterized in that** said second electrode (73) is arranged in said working surface (21).

20. Machine (1) according to any one of claims 13-20, **characterized in that** said detection system (7) comprises optical means suitable for detecting the approach of a user or a limb thereof in proximity to said cutting group (3),
wherein said control unit is suitable for detecting the approach of a user or a limb thereof in proximity to said cutting group (3).

21. Machine (1) according to any one of the preceding claims, **characterized in that** said cutting group (3) comprises a circular saw (31).
